# EUROPEAN PATENT SPECIFICATION

(11) **EP 1 982 103 B1**
(45) Date of publication and mention of the grant of the patent: **23.12.2009**
(21) Application number: 07700676.5
(22) Date of filing: 24.01.2007
(51) Int. Cl.: F16M 13/02, H04N 5/64, A47B 95/00

(54) **KIT FOR MOUNTING A FLAT TV AND A METHOD FOR MOUNTING A FLAT TV USING SUCH A KIT**
MONTAGESATZ FÜR EIN FLACHFERNSEHEN UND VERFAHREN ZUR MONTAGE EINES FLACHFERNSEHENS DAMIT
KIT DESTINE A MONTER UN TELEVISEUR A ECRAN PLAT ET PROCEDE DESTINE A MONTER UN TELEVISEUR A ECRAN PLAT UTILISANT UN TEL KIT

(30) Priority: 27.01.2006 EP 06100922
(43) Date of publication of application: 22.10.2008
(73) Proprietor: Koninklijke Philips Electronics N.V., 5621 BA Eindhoven (NL)
(72) Inventor: DE VAAN, Adrianus, J., S., M., NL-5656 AA Eindhoven (NL)
(74) Representative: Uittenbogaard, Frank
(86) International application number: PCT/IB2007/050237
(87) International publication number: WO 2007/086007

(56) References cited:
- WO-A-2004/083658
- DE-U1- 29 903 803
- JP-A- 11 331 735
- US-A1- 2005 044 673

## Description

The invention relates to a kit for mounting a flat TV.

Different mounting kits to mount a flat TV are known from practice. To mount a flat TV for instance on a wall, a mount can be provided which has to be screwed to the wall and whereto the flat TV is connected. To mount the flat TV with such a mount on a wall is difficult for an installer of the flat TV. Especially, when the flat TV comprises a large screen it is difficult to position the flat TV to the desired position due to its size and its weight. Furthermore, when the flat TV is brought to the desired position and mounted to the wall, it is not easy to reposition the flat TV in order to change the screen position, i.e. the viewing angel. In other cases, a difficult mechanism is required to enable the repositioning of the flat TV when already being in mounted position.

It is therefore an object of the invention to provide a kit for mounting a flat TV to a wall or a stand, wherein it provides easy installing of the flat TV and at the same time enables easy repositioning of the flat TV.

In order to achieve this object, the kit according to the invention is designed as defined in claim 1. This kit comprises at least one foot providing a vertical support and a horizontal connector to be mounted on a wall, or a stand and to be mounted on the backside of the TV for providing support in a horizontal direction. Due to the vertical support, it is not necessary to hold the entire weight of the flat TV during mounting it on a wall or a stand. The weight of the flat TV only has to be held during bringing the flat TV towards its mounting position. When the flat TV is nearby the mounting position, the foot or feet can be placed on a surface, immediately carrying a lot of weight. Then the flat TV has to be brought towards the wall, or the stand without holding the heavy weight, which eases the installation of the television. To reposition the flat TV the horizontal connector can stay in connected position. After lifting the bottom of the flat TV off the surface, where it rests on in mounted position, the flat TV can be rotated. When the flat TV reaches the desired position, the foot or feet connected to the bottom of the flat TV can be put on the surface again.

It is to be noted that JP-A 11 331735 discloses a planar type image display device provided with a supporting structure according to the preamble of claim 1.

According to the invention, the horizontal connector comprises a television part adapted to be fixed to the backside of the flat TV and a mount part adapted to be fixed to the wall or the stand. The mount part can be fixed to the wall on the desired position before installing the flat TV and the television part can be fixed to the backside of the flat TV before installing the flat TV. Both places can be accessed easily and therefore fixing both parts can be done quickly. To reposition the flat TV the magnetic connector enables rotating of the television part relatively to the mount part. According to the invention the mount part comprises a magnetic element creating a magnetic force and the television part comprises a metal element or vice versa. Due to this configuration, during mounting the flat TV, the magnetic force of the magnetic element helps to connect the television part to the mount part. When the television part approaches the mount part, the magnetic force pulls the flat TV towards the mounting position and keeps the TV in that position.

The invention further relates to a method for mounting a flat TV, using a kit according to any of the claims 1-7, wherein the method comprises:
- fixing a television part of the magnetic connector to the backside of the flat TV and fixing a mount part of the magnetic connector to a wall or a stand or the like;
- connecting at least one foot to a bottom of the flat TV;
- positioning the flat TV by connecting the television part to the mount part to provide a support in a horizontal direction;
- positioning of the at least one foot on a surface providing vertical support.

This method provides the same kind of advantages as the aforementioned kit for mounting a flat TV.

The invention also relates to a system comprising a kit according to the invention and a flat TV mounted or mountable to the kit.

The invention will be further elucidated by means of exemplary embodiments with reference to the accompanying drawings in which:
Fig. 1 shows a side view of a flat TV mounted on a stand;
Figs. 2a and 2b show a side and top view of a detail of fig. 1;
Fig 3 shows a front view of a flat TV mounted on a stand; and
Fig. 4 shows another side view of a flat TV.

In the Figs similar reference numerals refer to similar parts.

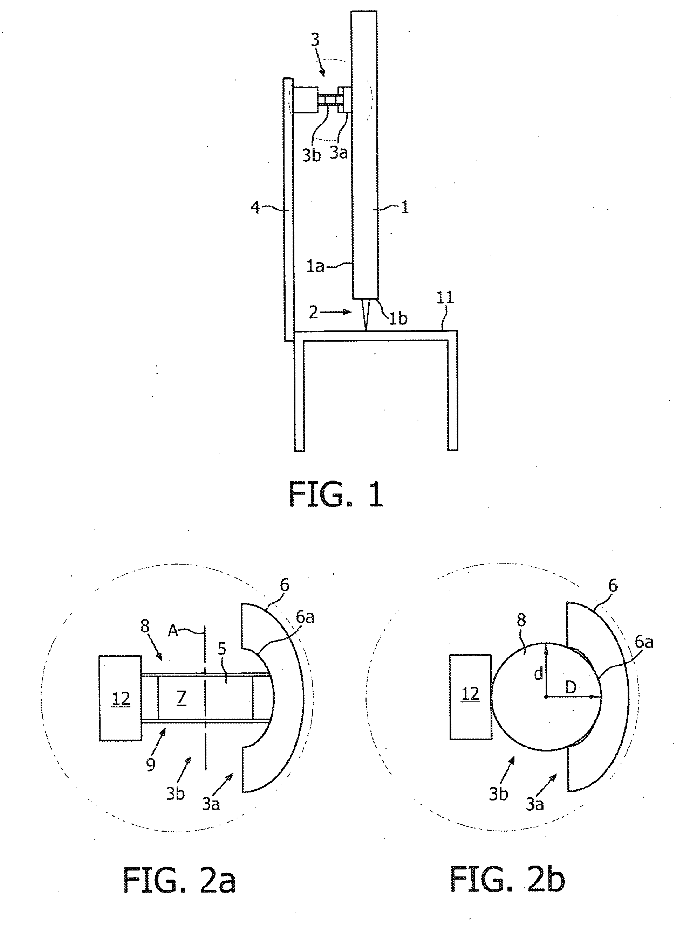

In Fig. 1 a side view of a flat TV 1 mounted on a stand is shown. The flat TV 1 is mounted on the stand 4 with aid of a kit for mounting a flat TV 1. The kit comprises two feet 2, 2' for providing a vertical support. The kit further comprises a horizontal connector 3, which is mounted on a stand 4 and on the backside 1a of the TV 1 for providing support in a horizontal direction.

The horizontal connector 3 comprises a television part 3a adapted to be fixed to the backside 1a of the TV 1 and a mount part 3b to be fixed to the stand 4. The mount part 3b is also suitable for fixing on a wall or another kind of vertical surface.

To install the flat TV 1 to a stand 4 or a wall, the television part 3a is fixed to the backside 1a of the flat TV 1, for instance with aid of screws or other fixing means. The mount part 3b is fixed to the desired position to the stand 4 or a wall, also with screws or other fixing means. The feet 2, 2' are connected to the bottom 1b of the flat TV 1. Then the flat TV is brought to the stand 4 by lifting the flat TV and positioning the flat TV by connecting the television part 3a to the mount part 3b to establish the horizontal connection. The feet 2, 2' are positioned on a surface 11 for vertical support. It should be clear that it is also possible to put the feet 2, 2' on the surface 11 before establishing the horizontal connection. While making that connection a lot of weight of the flat TV rests on the surface enabling easier mounting the TV 1 to the stand 4.

After mounting the flat TV 1, the TV I seems to be floating above the surface 11 and in front of the wall resulting in an aesthetic look and at the same time providing a strong and stable fixture.

Figs 2a and 2b provide a side view and a top view of the horizontal connector 3, respectively. The horizontal connector 3 is a magnetic connector. In fig. 2a can be seen that the mount part 3b of the horizontal connector 3 comprises a magnetic element 5 having a magnet 7 situated between to two plates 8, 9. The plates 8, 9 extend substantially parallel and preferably are metal plates. The mount part 3b further comprises fastening means 12 to fasten the mount part 3b to a stand or a wall. The television part 3a comprises a metal element 6. In another embodiment of the invention it is possible that the television part 3a comprises a magnetic element 5 and the mount part 3b comprises a metal element 6. Also two horizontal connectors 3 can be provided to mount the TV1 to a wall or a stand 4.

When repositioning the TV 1, the feet 2 are lifted and the TV is turned around axis A to a new desired position. The horizontal connector 3 stays connected. The shape of the magnetic element 5 and the metal element 6 enables easy rotation around axis A as can be seen in fig. 2b. Therefore, diameter d of plates 8, 9 having a substantially circular circumference corresponds to the diameter D of the substantially concave spherical surface 6a of the metal element 6. The concave spherical surface 6a faces the magnetic element 5 and is arranged to cooperate with the magnet element 5.

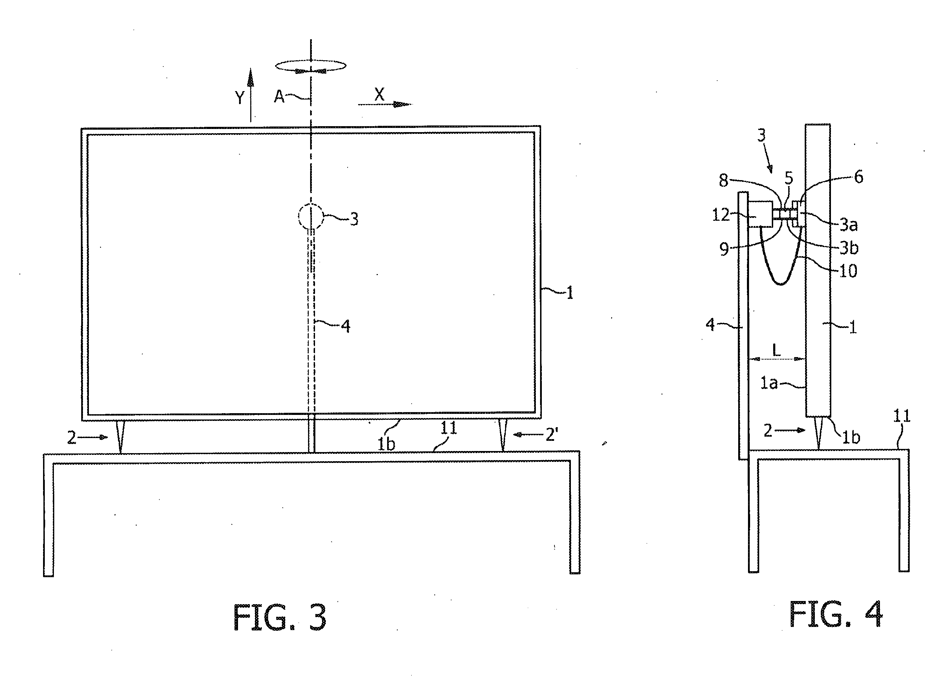

Fig. 3 shows a front view of a flat TV 1 mounted on a stand 4 with aid of a kit according to the invention. The feet 2, 2' are connected to the bottom 1b of the flat TV 1 and provide a vertical support on the surface 11. Due to the horizontal connector 3 that is provided in the middle of the flat TV, seen in X-direction, the TV 1 can easily rotate around axis A. First, the feet 2, 2' are lifted in direction Y and without much effort the viewing angle of the flat TV 1 can be changed. The magnetic force of the horizontal support holds the TV 1 during repositioning, which therefore helps the user by holding a lot of weight.

Fig. 4 shows another side view of the flat TV 1 in mounted position. A security element 10, for instance a chain, is attached to the mount part 3b and to the television part 3a of the horizontal connector 3. This security element 10 secures the flat TV and prevents it from dropping down if the magnetic horizontal connection 3 might fail, for instance by a mechanical shock. Because the chain is longer than the distance L between the stand 4 and the backside 1a of the flat TV 1, the chain can be easily connected to both parts 3a, 3b.

Although illustrative embodiments of the present invention have been described in greater detail with reference to the accompanying drawings, it is to be understood that the invention is not limited to these embodiments. Various changes or modifications may be effected by one skilled in the art without departing from the scope of the invention as defined in the claims.

## Claims

1. Kit for mounting a flat TV (1), comprising at least one foot (2) providing a vertical support and a horizontal connector (3) to be mounted on a wall or a stand (4) and on a backside (1a) of the TV (1) for providing support in a horizontal direction,
wherein the horizontal connector (3) comprises a television part (3a) adapted to be fixed to the backside (1a) of the flat TV (1) and a mount part (3b) adapted to be fixed to the wall or the stand (4),
**characterized in that** the mount part (3b) comprises a magnetic element (5) creating a magnetic force and the television part (3a) comprises a metal element (6), or.vice versa.

2. Kit according to claim 1, wherein the magnetic element (5) comprises a magnet (7) situated between two plates (8, 9), the plates (8, 9) extending substantially parallel.

3. Kit according to at least claim 2, wherein the plates (8, 9) have a substantially circular circumference.

4. Kit according to claim 2 or 3, wherein the plates (8, 9) are metal plates.

5. Kit according to at least claim 1, wherein the metal element of the television part (3a) has a substantially concave spherical surface (6a), being the surface facing the magnetic element of the mounting part (3b),
wherein the spherical surface (6a) is arranged to cooperate with the magnetic element of the mounting part (3b).

6. Kit according to any one of the preceding claims, wherein the at least one foot (2) providing a vertical support is connectable to a bottom (1b) of the flat TV (1) and is adapted to rest on a surface (11).

7. Kit according to any one of the preceding claims, wherein the kit comprises a security element (10), for instance a chain, for securing the flat TV (1) to the wall, or the stand (4) to prevent it from dropping down.

8. Method for mounting a flat TV, using a kit according to any of the claims 1-7 , wherein the method comprises:
- fixing a television part (3a) of the magnetic connector to a backside (1a) of the flat TV (1) and fixing a mount part (3b) of the magnetic connector to a wall or a stand (4)
- connecting the at least one foot (2) to a bottom (1b) of the flat TV (1);
- positioning the flat TV (1) by connecting the television part (3a) to the mount part (3b) to provide a support in a horizontal direction;
- positioning the at least one foot (2) on a surface (11) providing a vertical support.

9. Method according to claim 8, wherein the method further comprises securing the flat TV (1) to the wall or the stand (4) by fastening a security element (10) thereto and to the backside (1b) of the flat TV (1).

10. System comprising a kit according to any one of the claims 1 to 7 and a flat TV.

## Patentansprüche

1. Montagesatz zur Montage eines Flachfernsehers (1), mit mindestens einem, eine vertikale Stütze vorsehenden Fuß sowie einem, an einer Wand oder einem Ständer (4) und auf einer Rückseite (1a) des Fernsehers (1) anzubringenden, horizontalen Verbindungsstück (3), um eine Stütze in horizontaler Richtung vorzusehen,
wobei das horizontale Verbindungsstück (3) einen TV-Teil (3a), der so ausgebildet ist, dass er an der Rückseite (1a) des Flachfernsehers (1) befestigt wird, sowie einen Befestigungsteil (3b), der so ausgebildet ist, dass er an der Wand oder dem Ständer (4) befestigt wird, umfasst,
**dadurch gekennzeichnet, dass** der Befestigungsteil (3b) ein Magnetelement (5) und der TV-Teil (3a) ein, eine Magnetkraft erzeugendes Metallelement (6), oder umgekehrt, umfasst.

2. Montagesatz nach Anspruch 1, wobei das Magnetelement (5) einen zwischen zwei Platten (8, 9,) positionierten Magneten (7) umfasst, wobei die Platten (8, 9) sich im Wesentlichen parallel erstrecken.

3. Montagesatz nach zumindest Anspruch 2, wobei die Platten (8, 9) einen im Wesentlichen kreisförmigen Umfang aufweisen.

4. Montagesatz nach Anspruch 2 oder 3, wobei die Platten (8, 9) Metallplatten sind.

5. Montagesatz nach zumindest Anspruch 1, wobei das Metallelement des TV-Teils (3a) eine im Wesentlichen konkave, sphärische Oberfläche (6a) aufweist, wobei diese die dem Magnetelement des Befestigungsteils (3b) zugewandte Oberfläche darstellt, wobei die sphärische Oberfläche (6a) so angeordnet ist, dass sie mit dem Magnetelement des Befestigungsteils (3b) zusammenwirkt.

6. Montagesatz nach einem der vorangegangenen Ansprüche, wobei der mindestens eine, eine vertikale Stütze vorsehende Fuß (2) mit einer Unterseite (1b) des Flachfernsehers (1) verbindbar und so ausgebildet ist, dass er auf einer Oberfläche (11) aufliegt.

7. Montagesatz nach einem der vorangegangenen Ansprüche, wobei der Montagesatz ein Sicherheitselement (10), zum Beispiel eine Kette, umfasst, um den Flachfemseher (1) an der Wand oder dem Ständer (4) zu sichern, damit ein Herunterfallen desselben verhindert wird.

8. Verfahren zur Montage eines Flachfernsehers unter Verwendung eines Montagesatzes nach einem der Ansprüche 1-7, wobei das Verfahren die folgenden Schritte umfasst:
- Befestigen eines TV-Teils (3a) des magnetischen Verbindungsstücks an einer Rückseite (1a) des Flachfernsehers (1) sowie Befestigen eines Befestigungsteils (3b) des magnetischen Verbindungsstücks an einer Wand oder einem Ständer (4);
- Verbinden des mindestens einen Fußes (2) mit einer Unterseite (1b) des Flachfernsehers (1);
- Positionieren des Flachfernsehers (1) durch Verbinden des TV-Teils (3a) mit dem Befestigungsteil (3b), um eine Stütze in horizontaler Richtung vorzusehen;
- Positionieren des mindestens einen Fußes (2) auf einer Oberfläche (11), wobei eine vertikale Stütze vorgesehen wird.

9. Verfahren nach Anspruch 8, wobei das Verfahren weiterhin den Schritt des Sicherns des Flachfernsehers (1) an der Wand oder dem Ständer (4) durch Befestigen eines Sicherheitselements (10) an dieser/diesem sowie an der Rückseite (1b) des Flachfernsehers (1) umfasst.

10. System mit einem Montagesatz nach einem der Ansprüche 1 bis 7 sowie einem Flachfernseher.

## Revendications

1. Kit destiné à monter une télévision à écran plat (1), comprenant au moins un pied (2) qui fournit un support vertical et un connecteur horizontal (3) à monter sur une paroi ou un statif (4) et d'un côté arrière (1a) de la télévision (1) pour fournir un appui dans une direction horizontale, dans lequel le connecteur horizontal (3) comprend une partie de télévision (3a) qui est adaptée de manière à être fixée du côté arrière (1a) de la télévision à écran plat (1) et une partie de montage (3b) qui est adaptée de manière à être fixée à la paroi ou au statif (4), **caractérisé en ce que** la partie de montage (3b) comprend un élément magnétique (5) qui crée une force magnétique et **en ce que** la partie de télévision (3a) comprend un élément métallique (6), ou inversement.

2. Kit selon la revendication 1, dans lequel l'élément magnétique (5) comprend un aimant (7) qui se situe entre deux plaques (8, 9), les plaques (8, 9) s'étendant sensiblement en parallèle.

3. Kit selon au moins la revendication 2, dans lequel les plaques (8, 9) présentent une circonférence sensiblement circulaire.

4. Kit selon la revendication 2 ou selon la revendication 3, dans lequel les plaques (8, 9) sont des plaques métalliques.

5. Kit selon au moins la revendication 1, dans lequel l'élément métallique de la partie de télévision (3a) présente une surface sphérique sensiblement concave (6a), ladite surface étant la surface qui se situe vis-à-vis de l'élément magnétique de la partie de montage (3b) où la surface sphérique (6a) est agencée de manière à coopérer avec l'élément magnétique de la partie de montage (3b).

6. Kit selon l'une quelconque des revendications précédentes 1 à 5, dans lequel l'au moins un pied (2) qui fournit un support vertical est susceptible d'être relié au fond (1b) de la télévision à écran plat (1) et est adapté de manière à se reposer sur une surface (11).

7. Kit selon l'une quelconque des revendications précédentes 1 à 6, dans lequel le kit comprend un élément de sécurité (10), par exemple une chaîne, pour fixer la télévision à écran plat (10) à la paroi ou au statif (4) afin d'éviter qu'elle ne tombe par terre.

8. Procédé de montage d'une télévision à écran plat, utilisant un kit selon l'une quelconque des revendications précédentes 1 à 7, dans lequel le procédé comprend les étapes suivantes consistant à :
- fixer une partie de télévision (3a) du connecteur magnétique à un côté arrière (1a) de la télévision à écran plat (1) et à fixer une partie de montage (3b) du connecteur magnétique à une paroi ou à un statif (4) ;
- relier l'au moins un pied (2) à un fond (1b) de la télévision à écran plat (1) ;
- positionner la télévision à écran plat (1) en reliant la partie de télévision (3a) à la partie de montage (3b) afin de fournir un appui dans une direction horizontale ;
- positionner l'au moins un pied (2) sur une surface (11) qui fournit un support vertical.

9. Procédé selon la revendication 8, dans lequel le procédé comprend encore la fixation de la télévision à écran plat (1) à la paroi ou au statif (4) en y fixant un élément de sécurité (10) et au côté arrière (1b) de la télévision à écran plat (1).

10. Système comprenant un kit selon l'une quelconque des revendications précédentes 1 à 7 et une télévision à écran plat.
